# EUROPÄISCHE PATENTSCHRIFT

(11) **EP 0 686 787 B1**
(45) Veröffentlichungstag und Bekanntmachung des Hinweises auf die Patenterteilung: **14.10.1998**
(21) Anmeldenummer: 95108482.1
(22) Anmeldetag: 01.06.1995
(51) Int. Cl.: F16H 7/08

(54) **Hydraulische Spanneinrichtung für endlose, flexible Getriebeelemente**
Hydraulic tensioning device for endless, flexible transmission elements
Dispositif de tension hydraulique pour éléments de transmission flexibles sans fin

(30) Priorität: 06.06.1994 DE 9409155 U
(43) Veröffentlichungstag der Anmeldung: 13.12.1995
(73) Patentinhaber: JOH. WINKLHOFER & SÖHNE GmbH & Co KG, D-81369 München (DE)
(72) Erfinder: Schulze, Peter, D-85375 Neufahrn (DE)
(74) Vertreter: Grünecker, Kinkeldey, Stockmair & Schwanhäusser Anwaltssozietät

(56) Entgegenhaltungen:
- EP-A- 0 348 861
- EP-A- 0 463 289
- DE-C- 4 035 823
- DE-U- 9 016 594
- GB-A- 1 133 725
- US-A- 4 838 300
- US-A- 5 205 321

## Beschreibung

Die Erfindung bezieht sich auf eine hydraulische Spanneinrichtung der im Oberbegriff von Anspruch 1 erläuterten Art, wie sie insbesondere zum Spannen der Kette in Verbrennungsmotoren eingesetzt werden.

Eine hydraulische Spanneinrichtung dieser Art ist aus der EP-A-348 861 bekannt. Die bekannten Spanneinrichtung enthält einen in einer Druckkammer in einem Gehäuse bewegbaren Kolben, der gegen die Kette drückt. Der Kolben ist durch eine Kolbenfeder in Richtung auf die Kette belastet. Die Druckkammer steht mit dem Hydraulikkreislauf der Maschine in Verbindung, so daß der Kolben zusätzlich durch den Hydraulikdruck belastet wird. Die Hydraulikzufuhr zur Druckkammer erfolgt über ein Rückschlagventil, das in Richtung auf die Druckkammer öffnet und eine Kugel als Ventilteil sowie einen entsprechend ausgearbeiteten Ventilsitz aufweist. Läßt somit die Spannung der Kette nach, so drückt die Feder den Kolben weiter in Richtung auf die Kette während der dadurch erzeugte Unterdruck im Druckraum das Rückschlagventil öffnet und Hydraulikflüssigkeit nachsaugt.

Zwischen dem Kolben und den umgebenden Seitenwänden des Gehäuses ist ein Leckspalt vorgesehen, über den die Druckkammer entlastet wird, sobald sich die Kette, beispielsweise durch Schwingungen, wieder spannt und gegen den Kolben drückt. Da dieser Leckspalt immer offen ist, bewirkt er jedoch auch ein Leerlaufen der Druckkammer, sobald die Maschine steht bzw. die Hydraulikpumpe des Hydraulikkreislaufs nicht mehr arbeitet. Dieses Leerlaufen wird bei der bekannten Spanneinrichtung nicht verhindert. Es wird vielmehr eine Entlüftungsmöglichkeit vorgesehen, um bei einem erneuten Betriebsbeginn die Druckkammer wieder füllen zu können. Diese Entlüftung muß jedoch immer in einer bestimmten Lage angeordnet sein, um zu verhindern, daß die Druckkammer durch die Entlüftungsöffnung beim Befüllen oder gar während des Betriebs leerläuft. Dadurch kann die bekannte Spanneinrichtung nur in einer ganz bestimmten, vorgegebenen Stellung eingebaut werden, wofür oftmals der konstruktive Raum fehlt.

Es wurde zwar bereits versucht, anstelle des Leckspaltes ein weiteres Ventil vorzusehen, das nur bei einem vorbestimmten Überdruck in der Druckkammer öffnet, so daß kurzzeitig auftretende Spannungsspitzen abgebaut werden können. Diese Konstruktion weist jedoch einige Nachteile auf. Zum einen mußte festgestellt werden, daß es durchaus möglich ist, daß beide Ventile gleichzeitig offen sind. Zum anderen mußte ebenfalls festgestellt werden, daß bei bestimmten Schwingungszuständen des Motors Resonanzschwingungen der Ventilteile auftreten, die die Funktion beider Ventile beeinträchtigen. Darüber hinaus fehlt oftmals der konstruktive Raum für den Einbau des Überdruckventils.

Der Erfindung liegt somit die Aufgabe zugrunde, eine hydraulische Spanneinrichtung der genannten Art mit einem konstruktiv einfach und platzsparend ausgebildeten und betriebssicheren Überdruckventil auszustatten.

Die Aufgabe wird durch die kennzeichnenden Merkmale des Anspruchs 1 gelöst.

Durch die erfindungsgemäße Ausgestaltung sind Überdruckventil und Rückschlagventil in der Art einer gemeinsamen Baueinheit verbunden und an der im wesentlichen gleichen Stelle angeordnet, so daß die Gewähr besteht, daß auf beide Ventile die gleichen Druckverhältnisse einwirken. Durch die erfindungsgemäße Ausgestaltung sind die Ansprechdrücke und andere Parameter beiden Ventile besser aufeinander abstimmbar, so daß sich eine verbesserte Funktion der Spanneinrichtung ergibt. Die erfindungsgemäße Ausgestaltung erlaubt eine kompakte Bauweise, die auch bei äußerst beschränkten Platzverhältnissen noch einsetzbar ist. Die erfindungsgemäße Spanneinrichtung ist einfach herzustellen, problemlos zu montieren und kann in den unterschiedlichen räumlichen Lagen, z.B. auch in Überkopf-Lage, eingebaut werden.

Die Ansprüche 2 bis 4 beschreiben eine besonders einfache konstruktive Ausgestaltung des Ventilteils des Überdruckventils.

Durch die Ausgestaltung nach Anspruch 5 kann die das Ventilteil des Überdruckventils beaufschlagende Druckkraft vorbestimmt werden.

Anspruch 6 beschreibt eine besonders bevorzugte, platzsparende Anordnung des Überdruckventils.

Durch die Maßnahmen nach den Ansprüchen 7 und 8 wird eine gewisse Menge Hydraulikflüssigkeit zurückgehalten, auch wenn der Hydraulikkreislauf der Maschine beim Abschalten der Maschine leerläuft, so daß die erfindungsgemäße Spanneinrichtung sofort nach Start der Maschine wieder betriebsbereit ist.

Die Maßnahme nach Anspruch 9 stellt sicher, daß eventuell auftretende Resonanzschwingungen in beiden Ventilen unterschiedlich ausfallen, so daß sich die Schwingungen nicht betriebsstörend aufschaukeln können.

Durch die in Anspruch 10 angegebene Feder kann der Öffnungsdruck des Überdruckventils weiterhin vorbestimmt werden.

Der ringlinienförmige Dichtkontakt gemäß Anspruch 11 erlaubt eine genaue Vorbestimmung der vom Druck in der Druckkammer beaufschlagten Fläche.

Anspruch 12 beschreibt eine besonders bevorzugte Möglichkeit, eine derartige ringlinienförmige Dichtfläche herzustellen, wobei durch Verschiebung des Krümmungsmittelpunktes in einfacher Weise die zu beaufschlagende Fläche an unterschiedliche Einsatzzwecke der erfindungsgemäßen Spanneinrichtung angepaßt werden kann.

Durch die Maßnahme nach Anspruch 13 wird insbesondere bei einem Überkopf-Einbau der erfindungsgemäßen Spanneinrichtung verhindert, daß das Hydraulikmittel aus der Druckkammer nach dem Öffnen des Überdruckventils zu schnell abläuft.

Die Ansprüche 14 und 15 beschreiben eine konstruktiv besonders bevorzugte Möglichkeit, den Öffnungsweg des Überdruckventils zu begrenzen, wobei die Ausgestaltung nach Anspruch 15 den weiteren Vorteil hat, daß der Öffnungsweg auf einfache Weise durch die Länge der eingesetzten Hülse an unterschiedliche Einsatzzwecke angepaßt werden kann.

Anspruch 16 beschreibt ein bevorzugt verwendetes Rückschlagventil.

Ausführungsformen der Erfindung werden nachfolgend anhand der Zeichnungen näher erläutert. Es zeigen:
- Fig. 1: eine vergrößerte Teildarstellung eines ersten Ausführungsbeispiels einer erfindungsgemäßen Spanneinrichtung im Längsschnitt, und
- Fig. 2: einen Längsschnitt durch ein weiteres Ausführungsbeispiel der erfindungsgemäßen Spanneinrichtung.

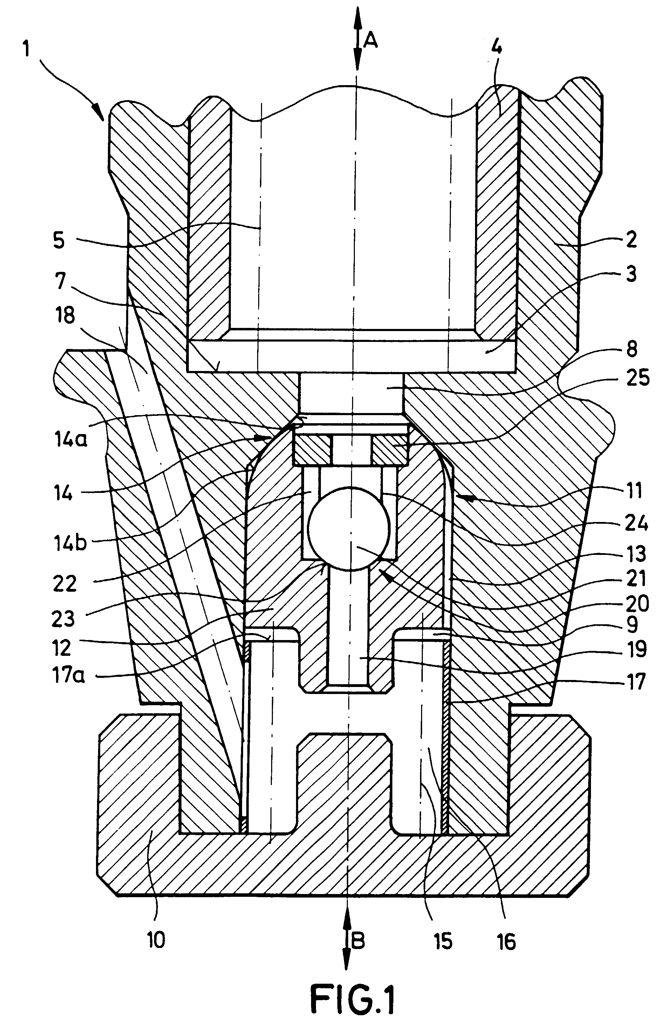

Aus Fig. 1 ist eine hydraulische Spanneinrichtung zum Spannen endloser Übertragungselemente, wie beispielsweise Riemen oder Ketten ersichtlich, die sich insbesondere als Kettenspanner für Brennkraftmaschinen eignet. Die Spanneinrichtung 1 hat ein Gehäuse 2, in dem eine als Sacklochbohrung ausgebildete Druckkammer 3 vorgesehen ist. In der Druckkammer 3 ist ein Kolben 4 in Richtung des Doppelpfeiles A axial bewegbar. Der Kolben 4 wird durch eine nur angedeutete Kolbenfeder 5 belastet, die sich an der Endfläche 7 der Sacklochbohrung 3 abstützt und bestrebt ist, den Kolben 4 von der Endfläche 7 wegzudrücken.

Die Druckkammer 3 steht über einen koaxial mit der Druckkammer 3 ausgerichteten, sich durch die Endfläche 7 erstreckenden Verbindungskanal 8 mit einer Bohrung 9 in Verbindung, die wiederum als Sacklochbohrung ausgebildet ist, sich von dem der Druckkammer 3 abgewandten Ende her in das Gehäuse 2 erstreckt und durch einen Verschlußdeckel 10 abgedeckt wird. Die Bohrung 9 verläuft koaxial zur Druckkammer 3.

In der Bohrung 9 ist ein Überdruckventil 11 angeordnet, dessen Ventilteil 12 als kolbenartiges Druckstück ausgebildet ist und im Umfangsflächenkontakt mit den Begrenzungswänden der Bohrung 9 in Richtung des Doppelpfeiles B in der Bohrung 9 bewegbar ist. Im Ventilteil 12 sind in Umfangsrichtung verteilt Umfangsnuten 13 eingeformt, die sich in Axialrichtung über die gesamte Länge des Umfangs des Ventilteiles 12 erstrecken.

Der Ventilsitz 14 des Überdruckventiles 11 enthält eine ebene Ventilsitzfläche 14a und eine gekrümmte Ventilsitzfläche 14b, die einen ringlinienförmigen Dichtkontakt bewirken. Die ebene Ventilsitzfläche 14a ist als Kegelmantelfläche ausgebildet und erstreckt sich zwischen dem Verbindungskanal 8 und den Umfangswänden der Bohrung 9. Die gekrümmte Ventilsitzfläche 14b ist an einer Stirnseite des Ventilteiles 12 vorgesehen. Durch Wahl des Krümmungsradius der gekrümmten Ventilsitzfläche 14b kann der Abstand des ringlinienförmigen Dichtkontaktes von der Mitte des Verbindungskanales 8 und somit die wirksame Querschnittsfläche des Verbindungskanals 8 bestimmt werden, so daß durch Wahl eines geeigneten Krümmungsradius die Flächengröße der vom Druck in der Druckkammer 3 beaufschlagbaren Fläche des Ventilteiles 12 vorbestimmt werden kann.

Das Ventilteil 12 wird durch eine Ventilfeder 15 in Dichtkontakt der beiden Ventilsitzflächen 14a, 14b gedrückt, die sich am Verschlußdeckel 10 abstützt und die diejenige Stirnfläche des Ventilteils 12 beaufschlagt, die der Ventilsitzfläche 14b gegenüberliegt. Die Ventilfeder 15 ist in einem Raum 16 der Bohrung 9 zwischen dem Verschlußdeckel 10 und dem Ventilteil 12 untergebracht.

In diesem Raum 16 ist eineHülse 17 eingesetzt, die in Umfangskontakt mit den Begrenzungswänden der Bohrung 9 steht und in Axialrichtung kürzer ist als der Abstand zwischen dem Ventilteil 12 und dem Verschlußdeckel 10. Die dem Ventilteil 12 zugewandte Oberseite der Hülse 17 ist als Anschlagfläche 17a für die Bewegung des Ventilteiles 12 ausgebildet. Durch eine zweckmäßige Bemessung der axialen Länge der Hülse 17 kann somit der Weg des Ventilteiles 12 und dadurch der maximale Öffnungsquerschnitt zwischen den Ventilsitzflächen 14a und 14b vorbestimmt werden.

Die Hydraulikmittelzufuhr zur Druckkammer 3 erfolgt über einen in den Raum 16 einmündenden, mit dem Hydraulikkreislauf der Maschine verbundenen Kanal 18 durch das Gehäuse 2 und einen beide Stirnseiten des Ventilteiles 12 des Überdruckventils 11 verbindenden Kanal 19. Der Kanal 19 erstreckt sich mittig durch die gesamte Länge des Ventilteiles 12 und ist durch ein Rückschlagventil 20 absperrbar. Das Rückschlagventil 20 enthält eine der üblichen, als Kugel ausgebildeten Ventilteile 21, das in einer sacklochartig ausgebildeten, erweiterten Kammer 22 des Kanals 19 angeordnet ist. Das Ventilteil 21 liegt auf einer entsprechend sphärisch ausgearbeiteten Ventilsitzfläche 23 auf und wird durch eine nur angedeutete Ventilfeder 24 auf die Ventilsitzfläche 23 gedrückt. Die Ventilfeder 24 stützt sich auf einer Halteplatte 25 ab, die vom Kanal 19 durchsetzt wird und die erweiterte Kammer 22 in Richtung auf die Druckkammer 3 abschließt. Das Ventilteil 21 des Rückschlagventils 20 wird somit durch die Ventilfeder 4 von der Druckkammer 3 weggedrückt.

Die Masse des Rückschlagventils 20 und insbesondere seines Ventilteils 21 ist wesentlich kleiner als die Masse des Ventilteils 12 des Überdruckventils 11, so daß beide ein stark unterschiedliches Resonsanzschwingverhalten zeigen, eventuell auftretende Resonanzschwingungen sich somit nicht "aufschaukeln" können.

Der Raum 16 kann durch eine zweckmäßige Wahl der Lage und Einmündungsrichtung des Kanals 18 als Sammelraum für Hydraulikmittel ausgebildet werden, wobei die Hydraulikzufuhr einen Bereich aufweist, der in Einbaulage oberhalb des Ventilteils 12 liegt. In der dargestellten Einbaulage, bei der der Verschlußdeckel 10 den tiefsten Punkt der Spanneinrichtung 1 bildet, wird durch den schräg nach oben verlaufenden Kanal 18 verhindert, daß der Sammelraum 16 und die Druckkammer 3 leerläuft, wenn der Motor abgestellt wird. Bei einem Überkopfeinbau, Verschlußdeckel 10 nach oben, könnte der Kanal 18 durch den Verschlußdeckel 10 von oben hindurchgeführt werden.

Die erfindungsgemäße Spanneinrichtung 1 arbeitet wie folgt. Der Kolben 4 wird durch die Kolbenfeder 5 in Spannkontakt mit dem endlosen Übertragungselement, insbesondere der Kette, gedrückt. Durch den dadurch entstehenden Unterdruck wird das Rückschlagventil 20 geöffnet, d.h. die Kugel 21 von ihrem Ventilsitz 23 abgehoben, so daß aus dem Kanal 18 und dem Sammelraum 16 Hydraulikmittel in die Druckkammer 3 nachgesaugt wird, bis der Druck in der Druckkammer 3 dem Druck im Hydraulikkreislauf, insbesondere dem Kanal 18 und dem Sammelraum 16 entspricht. Die Kette wird gespannt. Läßt die Spannung in der Kette nach, so drückt die Feder 5 den Kolben 4 weiter nach oben, es entsteht ein weiterer Unterdruck in der Druckkammer 3, der wiederum Hydraulikmittel nachsaugt. Steigt die Spannung in der Kette, beispielsweise durch Schwingungen oder dgl., über einen vorbestimmten Wert an, wird der Kolben 4 gegen die Kraft der Ventilfeder 5 in Richtung auf die Endfläche 7 gedrückt. Dadurch steigt der Druck in der Druckkammer 3 an. Der ansteigende Druck wirkt sowohl über die Ventilsitzfläche 14b als auch über das Ventilteil 21 des Rückschlagventils 20 auf das Ventilteil 12 des Überduckventils 11 ein und hält dabei das Rückschlagventil 20 geschlossen. Wird ein durch die Größe der Beaufschlagungsfläche am Ventilteil 12 des Überdruckventils 11 und die Ventilfeder 15 des Überdruckventils 11 bestimmter Druck überschritten, so wird das Ventilteil 12 in Richtung auf den Verschlußdeckel 10 gedrückt, wobei es, je nach Einbaulage, entweder die Hülse 17 mitnimmt, bis diese am Verschlußdekkel 10 anliegt, oder sich so weit in Richtung Verschlußdeckel 10 bewegt, bis es an der Anschlagfläche 17a aufliegt. Dadurch wird zwischen den Ventilsitzflächen 14a, 14b ein Spalt vorbestimmter Querschnittsfläche geöffnet, durch den Hydraulikmittel fließt oder gedrückt wird, das über die Umfangsnuten 13 in den Sammelraum 16 und gegebenenfalls über den Kanal 18 zurück in den Hydraulikkreislauf gelangt. Sobald der vorbestimmte Überdruck abgebaut ist, drückt die Ventilfeder 15 das Ventilteil 12 wieder in Dichtkontakt, so daß die Druckkammer 3 wieder geschlossen ist.

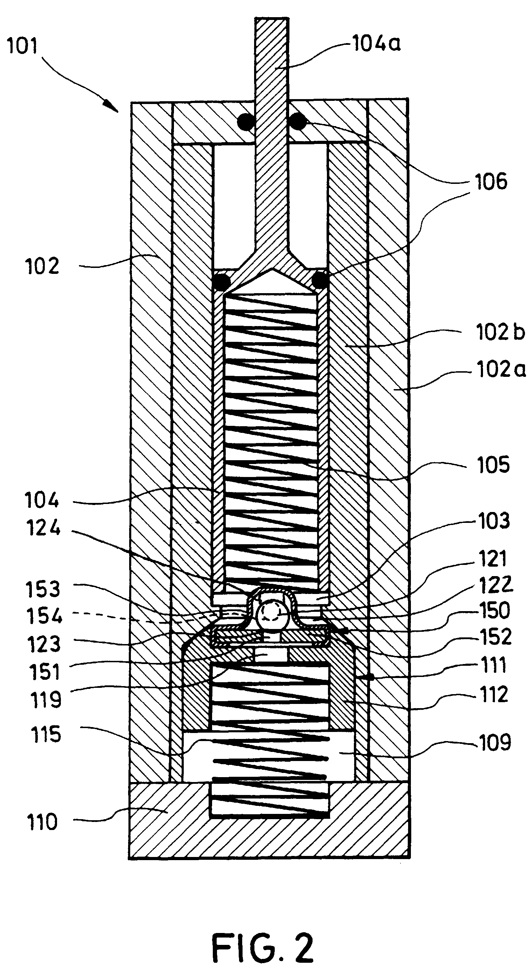

Aus Fig. 2 ist ein weiteres Ausführungsbeispiel der Erfindung ersichtlich, wobei gleiche bzw. vergleichbare Bauteile mit den gleichen, jedoch um 100 erhöhten Bezugszeichen versehen und nicht nochmals erläutert sind. Fig. 2 zeigt eine Spanneinrichtung 101 mit einem Gehäuse 102, das aus einem äußeren Mantel 102a aus Aluminium und einer inneren Stahlhülse 102b besteht. Die Stahlhülse 102b umschließt den Umfang einer Druckkammer 103, in der ein Kolben 104 bewegbar ist. Der Kolben 104 hat eine Kolbenstange 104a, die sich durch das Gehäuse 102 erstreckt. Kolbenstange 104a und Kolben 104 sind über Dichtungen 106 gegen das Gehäuse 102 abgedichtet.

Koaxial mit der Druckkammer 103 ist im Gehäuse 102 eine Bohrung 109 vorgesehen, die mit einem Verschlußdeckel 110 verschlossen ist. In der Bohrung 109 bewegt sich das als kolbenartiges Druckstück ausgebildete Ventilteil 112 eines Überdruckventils 111. Das Ventilteil 112 wird durch die Ventilfeder 115 belastet.

Der Hydraulikmittel-Kanal 119 durch das Ventilteil 112 ist durch ein als vorgefertigte Einheit 150 ausgebildetes Rückschlagventil verschließbar, das in eine erweiterte Kammer 122 eingesetzt ist. Das Rückschlagventil 150 enthält wiederum eine durch eine Ventilfeder 124 beaufschlagte Kugel 121 als Ventilteil, die auf einer entsprechend ausgeformten Ventilsitzfläche 123 sitzt, die rund um eine als Verlängerung des Kanals 119 ausgebildeten Öffnung 151 in einer Platte 152 angeordnet ist. Die Platte 152, die Kugel 121 und die Ventilfeder 123 sind von einem Mantel 153 aus Metall umschlossen und somit zu einer Einheit zusammengefügt. Durch den Mantel 153 erstreckt sich eine Verlängerung der Eintrittsöffnung 151 und zweckmäßige Austrittsöffnungen 154. Das als Einheit ausgebildete Rückschlagventil 150 wird von der Sitzflächenseite her in der Kammer 122 des Ventilteils 112 eingesetzt und dort befestigt. Auch bei diesem Ausführungsbeispiel ist die Masse des Ventilteiles 112 groß gegenüber der Masse des Rückschlagventils 150.

Die Wirkungsweise der Spanneinrichtung 110 entspricht der Spanneinrichtung 100.

In Abwandlung der beschriebenen und gezeichneten Ausführungsbeispiele können Einzelheiten der Fig. untereinander ausgetauscht werden. So kann beispielsweise auch die das Überdruckventil aufnehmende Bohrung der Fig. 1 größer im Durchmesser sein als die Druckkammer, wie dies in Fig. 2 gezeigt ist. Das Rückschlagventil kann auf das Ventilteil des Überdruckventiles außen aufgesetzt oder in anderer Weise in Reihe verbunden werden. Die druckbeaufschlagten Flächengrößen sowie die Federkräfte können je nach Einsatzzweck oder Einbaulage variiert werden. Anstelle der Hülse können andere Einrichtungen zur Begrenzung des Öffnungsweges des Überdruckventiles vorgesehen werden. Bei einem gegenüber Fig. 1 um 180° verdrehten Einbau, bei der das Hydraulikmittel durch den Öffnungsspalt des Überdruckventils entgegen der Schwerkraft gedrückt werden muß, kann eine Anschlagbegrenzung unter Umständen entfallen. Schließlich kann die Erfindung auch bei anderen hydraulischen Spanneinrichtungen mit abweichenden Kolbenformen eingesetzt werden.

## Patentansprüche

1. Hydraulische Spanneinrichtung (1, 101) für endlose Übertragungselemente, insbesondere Kettenspanner für Brennkraftmaschinen, mit einem Gehäuse (2, 102), einer im Gehäuse angeordneten Druckkammer (3, 103), einem in der Druckkammer bewegbaren Kolben (4, 104), einer Hydraulikmittelzufuhr (19, 119) zur Druckkammer, einem in der Hydraulikmittelzufuhr (19, 119) angeordneten,vom Druck in der Druckkkammer in Schließstellung beaufschlagten Rückschlagventil (20, 150) und einer Einrichtung (11, 111) zum selbsttätigen Druckabbau in der Druckkammer, **dadurch gekennzeichnet**, daß die Einrichtung zum Druckabbau ein von einem vorbestimmten Druck in der Druckkammer (3, 103) zu öffnendes Überdruckventil (11, 111) ist, und daß das Rückschlagventil (20, 150) mit dem Ventilteil (12, 112) des Überdruckventils (11, 111) verbunden ist.

2. Spanneinrichtung nach Anspruch 1, **dadurch gekennzeichnet**, daß die Hydraulikmittelzufuhr einen Kanal (19, 119) durch das Ventilteil (12, 112) des Überdruckventils (11, 111) enthält, der durch das Rückschlagventil (20, 150) absperrbar ist.

3. Spanneinrichtung nach Anspruch 1 oder 2, **dadurch gekennzeichnet**, daß das Ventilteil (12, 112) des Überdruckventils (11, 111) als kolbenartiges Druckstück ausgebildet und mit Umfangsflächenkontakt in Axialrichtung in einer Bohrung (9, 109) bewegbar ist.

4. Spanneinrichtung nach Anspruch 3, **dadurch gekennzeichnet**, daß in der Umfangsfläche des Ventilteils (12, 112) Entlastungsnuten (13) vorgesehen sind.

5. Spanneinrichtung nach Anspruch 3 oder 4, **dadurch gekennzeichnet**, daß die Bohrung (9, 109) mit der Druckkammer (3, 103) über einen Verbindungskanal (8) vorbestimmter Querschnittsfläche in Verbindung steht.

6. Spanneinrichtung nach einem der Ansprüche 3 bis 5, **dadurch gekennzeichnet**, daß die Bohrung (9, 109) koaxial mit der Druckkammer (3, 103) im Gehäuse (2, 102) untergebracht ist.

7. Spanneinrichtung nach einem der Ansprüche 1 bis 6, **dadurch gekennzeichnet**, daß an der der Druckkammer (3, 103) abgewandten Seite des Ventilteils (12, 112) des Überdruckventils (11, 111) ein Sammelraum (16) für Hydraulikmittel vorgesehen ist.

8. Spanneinrichtung nach einem der Ansprüche 3 bis 7, **dadurch gekennzeichnet**, daß die das Überdruckventil (11, 111) aufnehmende Bohrung (9, 109) in Axialrichtung länger ist als das Ventilteil (12, 112), daß der Sammelraum (16) in der Bohrung (9, 109) angeordnet ist, und daß die Hydraulikmittelzufuhr einen Bereich (18, 16) aufweist, der in Einbaulage oberhalb des Ventilteils (12, 112) liegt.

9. Spanneinrichtung nach einem der Ansprüche 3 bis 8, **dadurch gekennzeichnet**, daß die Masse des Ventilteils (12, 112) des Überdruckventils (11, 111) groß gegenüber der Masse des Ventilteils (21, 121) des Rückschlagventils (20, 150) ist.

10. Spanneinrichtung nach einem der Ansprüche 1 bis 9, **dadurch gekennzeichnet**, daß das Ventilteil (12, 112) des Überdruckventils (11, 111) durch eine Feder (15, 115) mit vorbestimmter Federkraft belastet ist.

11. Spanneinrichtung nach einem der Ansprüche 1 bis 10, **dadurch gekennzeichnet**, daß der Ventilsitz (14, 114) des Überdruckventils (11, 111) für einen ringlinienförmigen Dichtkontakt ausgebildet ist.

12. Spanneinrichtung nach Anspruch 11, **dadurch gekennzeichnet**, daß die Ventilsitzfläche (14b) am Ventilteil (12, 112) gekrümmt ist und mit einer ebenen Gegensitzfläche (14a) zusammenwirkt.

13. Spanneinrichtung nach einem der Ansprüche 1 bis 12, **dadurch gekennzeichnet**, daß eine Einrichtung (17) zum Einstellen eines maximalen Öffnungsquerschnitts des Überdruckventils (11, 111) vorgesehen ist.

14. Spanneinrichtung nach Anspruch 13, **dadurch gekennzeichnet**, daß die Einrichtung einen Anschlag (17a) zur Begrenzung des Öffnungsbewegung des Ventilteils (12, 112) des Überdruckventils (11, 111) enthält.

15. Spanneinrichtung nach Anspruch 13 oder 14, **dadurch gekennzeichnet**, daß die Einrichtung zum Einstellen des maximalen Öffnungsquerschnitts des Überdruckventils (11, 111) eine in die Bohrung (9, 109) eingesetzte Hülse (17) vorbestimmter axialer Länge enthält.

16. Spanneinrichtung nach einem der Ansprüche 1 bis 15, **dadurch gekennzeichnet**, daß das Rückschlagventil (20, 120) ein kugelförmiges Ventilteil (21, 121) und einen korrespondierend ausgeformten Ventilsitz (23, 123) enthält.

## Claims

1. A hydraulic tensioner (1, 101) for endless transmission elements, in particular chain tensioners for internal combustion engines, comprising a housing (2, 102), a pressure chamber (3, 103) arranged in said housing, a piston (4, 104) movable in said pressure chamber, a hydraulic fluid supply (19, 119) to said pressure chamber, a check valve (20, 150) which is arranged within said hydraulic fluid supply (19, 119) and is acted upon by pressure in said pressure chamber in the closing position, and a means (11, 111) for automatically reducing the pressure in said pressure chamber, **characterized in** that said pressure reducing means is a pressure-relief valve (11, 111) to be opened by a predetermined pressure in said pressure chamber (3, 103), and that said check valve (20, 120) is connected to said valve member (12, 112) of said pressure-relief valve (11, 111).

2. A tensioner according to claim 1, **characterized in** that said hydraulic fluid supply includes a channel (19, 119) extending through the valve member (12, 112) of said pressure-relief valve (11, 111), which can be shut off by said check valve (20, 120).

3. A tensioner according to claim 1 or 2, **characterized in** that said valve member (12, 112) of said pressure-relief valve (11, 111) is formed as a piston-like pressure member and is movable with circumferential surface contact in axial direction in a hole (9, 109).

4. A tensioner according to claim 3, **characterized in** that relief grooves (13) are provided in the circumferential surface of said valve member (12, 112).

5. A tensioner according to claim 3 or 4, **characterized in** that said hole (9, 109) communicates with said pressure chamber (3, 103) via a communication channel (8) of a predetermined cross-sectional area.

6. A tensioner according to any one of claims 3 to 5, **characterized in** that said hole (9, 109) is coaxially accommodated with said pressure chamber (3, 103) in said housing (2, 102).

7. A tensioner according to any one of claims 1 to 6, **characterized in** that a collection chamber (16) for hydraulic fluid is provided at the side of said valve member (12, 112) of said pressure-relief valve (11, 111) that faces away from said pressure chamber (3, 103).

8. A tensioner according to any one of claims 3 to 7, **characterized in** that said hole (9, 109) which receives said pressure-relief valve (11, 111) is longer in axial direction than said valve member (12, 112), that said collection chamber (16) is disposed in said hole (9, 209), and that said hydraulic fluid supply has an area (18, 16) which is above said valve member (12, 122) in the position of installation.

9. A tensioner according to any one of claims 3 to 8, **characterized in** that the mass of said valve member (12, 112) of said pressure-relief valve (11, 111) is large in comparison with the mass of said valve member (21, 121) of said check valve (20, 150).

10. A tensioner according to any one of claims 1 to 9, **characterized in** that said valve member (12, 112) of said pressure-relief valve (11, 111) is loaded by a spring (15, 115) with a predetermined resilient force.

11. A tensioner according to any one of claims 1 to 10, **characterized in** that said valve seat (14, 114) of said pressure-relief valve (11, 111) is formed for an annular linear sealing contact.

12. A tensioner according to claim 11, **characterized in** that a valve seat surface (14b) on said valve member (12, 112) is curved and cooperates with a plane counterseat surface (14a).

13. A tensioner according to any one of claims 1 to 12, **characterized in** that a means (17) is provided for setting a maximum opening cross-section of said pressure-relief valve (11, 111).

14. A tensioner according to claim 13, **characterized in** that said means contains a stop (17a) for defining the opening movement of said valve member (12, 112) of said pressure-relief valve (11, 111).

15. A tensioner according to claim 13 or 14, **characterized in** that said means for setting the maximum opening cross-section of said pressure-relief valve (11, 111) contains a sleeve (17) of predetermined axial length which is inserted into said hole (9, 109).

16. A tensioner according to any one of claims 1 to 15, **characterized in** that said check valve (20, 120) contains a ball-shaped valve member (21, 121) and a correspondingly formed valve seat (23, 123).

## Revendications

1. Dispositif tendeur hydraulique (1, 101) pour éléments de transmission sans fin, en particulier tendeur de chaîne pour moteurs à combustion interne, comprenant un boîtier (2, 102), une chambre de pression (3, 103) aménagée dans le boîtier, un piston (4, 104) disposé de façon mobile dans la chambre de pression, un système (19, 119) d'acheminement de fluide hydraulique vers la chambre de pression, un clapet anti-retour (20, 150) disposé dans le système (19, 119) d'acheminement de fluide hydraulique et soumis à la pression régnant dans la chambre de pression, en direction de sa position de fermeture, et un dispositif (11, 111) permettant une diminution automatique de la pression dans la chambre de pression, caractérisé en ce que le dispositif de diminution de la pression est une soupape de surpression (11, 111) destinée à être ouverte par une pression prédéterminée régnant dans la chambre de pression (3, 103), et en ce que le clapet anti-retour (20, 150) est relié à l'élément de soupape (12, 112) de la soupape de surpression (11, 111).

2. Dispositif tendeur selon la revendication 1, caractérisé en ce que le système d'acheminement de fluide hydraulique comporte un canal (19, 119) traversant l'élément de soupape (12, 112) de la soupape de surpression (11, 111), qui peut être obturé par le clapet anti-retour (20, 150).

3. Dispositif tendeur selon la revendication 1 ou 2, caractérisé en ce que l'élément de soupape (12, 112) de la soupape de surpression (11, 111) est réalisé sous forme d'un élément de pression en forme de piston et peut être déplacé dans le sens axial d'un alésage (9, 109) en gardant un contact de surface périphérique.

4. Dispositif tendeur selon la revendication 3, caractérisé en ce que des trous de décompression (13) sont prévus dans la surface périphérique de l'élément de soupape (12, 112).

5. Dispositif tendeur selon la revendication 3 ou 4, caractérisé en ce que l'alésage (9, 109) communique avec la chambre de pression (3, 103) via un canal de liaison (8) ayant une aire de section prédéterminée.

6. Dispositif tendeur selon l'une des revendications 3 à 5, caractérisé en ce que l'alésage (9, 109) est aménagé dans le boîtier (2, 102) coaxialement à la chambre de pression (3, 103).

7. Dispositif tendeur selon l'une des revendications 1 à 6, caractérisé en ce que, du côté de l'élément de soupape (12, 112) de la soupape de surpression (11, 111), qui est orienté vers l'opposé de la chambre de pression (3, 103), une chambre (16) d'accumulation de fluide hydraulique est prévue.

8. Dispositif tendeur selon l'une des revendications 3 à 7, caractérisé en ce que l'alésage (9, 109) qui reçoit la soupape de surpression (11, 111) est plus long, dans le sens axial, que l'élément de soupape (12, 112), en ce que la chambre d'accumulation (16) est aménagée dans l'alésage (9, 109), et en ce que le système d'acheminement de fluide hydraulique comporte une zone (18, 16) qui, en position de montage, se situe au-dessus de l'élément de soupape (12, 112).

9. Dispositif tendeur selon l'une des revendications 3 à 8, caractérisé en ce que la masse de l'élément de soupape (12, 112) de la soupape de surpression (11, 111) est grande par rapport à la masse de l'élément de soupape (21, 121) du clapet anti-retour (20, 150).

10. Dispositif tendeur selon l'une des revendications 1 à 9, caractérisé en ce que l'élément de soupape (12., 112) de la soupape de surpression (11, 111) est précontraint par un ressort (15, 115) ayant une force de ressort prédéterminée.

11. Dispositif tendeur selon l'une des revendications 1 à 10, caractérisé en ce que le siège de soupape (14, 114) de la soupape de surpression (11, 111) est configuré de manière à produire un contact étanche linéaire en forme d'anneau.

12. Dispositif tendeur selon la revendication 11, caractérisé en ce que la surface (14b) de siège de soupape de l'élément de soupape (12, 112) est incurvée et coopère avec une surface de siège conjuguée (14a) plane.

13. Dispositif tendeur selon l'une des revendications 1 à 12, caractérisé en ce qu'un dispositif (17) de réglage de la section d'ouverture maximale de la soupape de surpression (11, 111) est prévu.

14. Dispositif tendeur selon la revendication 13, caractérisé en ce que le dispositif comporte une butée (17a) destinée à limiter le mouvement d'ouverture de l'élément de soupape (12, 112) de la soupape de surpression (11, 111).

15. Dispositif tendeur selon la revendication 13 ou 14, caractérisé en ce que le dispositif de réglage de la section d'ouverture maximale de la soupape de surpression (11, 111) comporte une douille (17) d'une longueur axiale prédéterminée, insérée dans l'alésage (9, 109).

16. Dispositif tendeur selon l'une des revendications 1 à 15, caractérisé en ce que le clapet anti-retour (20, 120) comprend un élément de soupape sphérique (21, 121) et un siège de soupape (23, 123) présentant une forme correspondante.
